# EUROPÄISCHE PATENTSCHRIFT

(11) **EP 2 767 739 B1**
(45) Veröffentlichungstag und Bekanntmachung des Hinweises auf die Patenterteilung: **24.10.2018**
(21) Anmeldenummer: 13155719.1
(22) Anmeldetag: 19.02.2013
(51) Int. Cl.: F16H 61/462

(54) **Leistungsverzweigtes Getriebe für einen Fahrantrieb, Verfahren zur Steuerung des Getriebes**
Power-split transmission for a vehicle propulsion system, method for controlling the transmission
Engrenage à puissance dérivée pour un entraînement de roulement, procédé de commande de l'engrenage

(43) Veröffentlichungstag der Anmeldung: 20.08.2014
(73) Patentinhaber: Dana Rexroth Transmission Systems S.r.l., 38062 Arco (Trento) (IT)
(72) Erfinder: Mutschler, Steffen, 38062 Arco (IT); Scandella, Walter, 24126 Bergamo (IT); Mueller, Matthias, 89129 Langenau (DE)
(74) Vertreter: Maiß, Harald

(56) Entgegenhaltungen:
- EP-A1- 0 497 293
- EP-A1- 1 610 040
- EP-A1- 1 927 762
- EP-A1- 2 123 948
- DE-A1- 3 247 287
- DE-A1- 3 441 185
- DE-A1- 19 524 669
- DE-A1- 19 642 503
- DE-A1-102010 030 262
- US-A- 5 177 964
- US-A1- 2002 026 275

## Beschreibung

Die Erfindung betrifft ein leistungsverzweigtes Getriebe für einen Fahrantrieb gemäß dem Oberbegriff des Patentanspruchs 1, und ein Verfahren zur Steuerung des Getriebes gemäß dem Oberbegriff des Patentanspruchs 9. DE102010030262 offenbart die Merkmale des Oberbegriffes des Anspruchs 1 und 9. Gattungsgemäße leistungsverzweigte Getriebe für einen Fahrantrieb, insbesondere einer mobilen Arbeitsmaschine, beispielsweise eines Radladers, weisen neben einem mechanischen Leistungszweig, der mit einer festen oder mit einer variablen Übersetzung betreibbar ist, einen weiteren Leistungszweig auf. Letztgenannter ist als hydraulischer Getriebezweig mit einer Hydropumpe und einem Hydromotor in einem geschlossenen hydraulischen Kreis ausgebildet. Wenigstens die Hydropumpe ist dabei mit verstellbarem Verdrängungsvolumen ausgebildet, so dass über den hydraulischen Getriebezweig das gesamte Übersetzungsverhältnis des leistungsverzweigten Getriebes stufenlos variierbar ist. Beide Leistungszweige können dabei über einen Summierabschnitt des Getriebes zusammengeführt werden und wirken so auf eine gemeinsame Abtriebswelle des Getriebes. Beide Leistungszweige sind über eine Getriebeeingangswelle mit einer Antriebsmaschine des Fahrantriebs, beispielsweise einer Verbrennungskraftmaschine, insbesondere einem Dieselmotor, koppelbar oder gekoppelt.

Bei bisherigen Getrieben wird das Verdrängungsvolumen mittels eines elektromagnetisch betätigbaren 4/3-Proportional-Wegeventil mit mechanischer Rückführung verstellt, das elektromagnetisch von einer Steuereinrichtung des Getriebes oder des Fahrantriebs angesteuert wird. Als Sollwertgeber einer Fahrgeschwindigkeit ist an die Steuereinrichtung beispielsweise ein Fahrpedal oder ein Joystick des Fahrantriebs angeschlossen. Der Sollwert der Fahrgeschwindigkeit bestimmt dabei den an das 4/3-Proportional-Wegeventil übergebenen Stellstrom und damit die Menge an Steuerdruckmittel, mit der eine Stellvorrichtung zur Verstellung des Verdrängungsvolumens der Hydropumpe beaufschlagt wird. Eine Rückmeldung der aktuellen Fahrgeschwindigkeit an die Steuereinrichtung erfolgt über einen Drehzahlsensor. Gattungsgemäße leistungsverzweigte Getriebe zeigen beispielsweise die Offenlegungsschriften DE 10 2007 037 107 A1 und DE 10 2007 037 664 A1.

Ein rein hydraulischer Fahrbereich, in dem die Leistungsübertragung nur über den hydraulischen Leistungszweig erfolgt und der mechanische Leistungszweig entkoppelt ist, eignet sich besonders für einen Arbeitsbetrieb des Fahrzeugs, in dem nur geringe Geschwindigkeiten benötigt werden, ein Antriebsmoment jedoch über weite Bereiche verstellbar sein muss. Ein leistungsverzweigter oder ein rein mechanischer Fahrbereich eignet sich hingegen überwiegend für den Fahrbetrieb mit eingeschränkter Dynamik bezüglich Fahrgeschwindigkeit und Zugkraft beziehungsweise mit nahezu konstantem Betriebspunkt.

Nachteilig an den bekannten Lösungen ist, dass die Getriebe nicht flexibel genug an diese unterschiedlichen Anforderungen der Fahrbereiche anpassbar sind. So kann es beispielsweise in einem Fahrbereich geringer Geschwindigkeit zu sprunghaft ansteigenden Lasten kommen, wenn ein Radlader mit seiner Schaufel in schweres Schüttgut einsticht. Stellzeiten herkömmlicher, elektroproportionaler Volumenstromregler sind dann häufig zu langsam, um ein Abwürgen der Antriebsmaschine in diesem relativ instabilen Betriebspunkt zu verhindern.

Eine alternative, ebenfalls übliche Regelung des Steuerdrucks der Pumpe ermöglicht die Reaktion auf derartige Lastanstiege, führt jedoch zu einer begrenzten Regelbarkeit der Geschwindigkeit in den leistungsverzweigten Bereichen.

Dem gegenüber liegt der Erfindung die Aufgabe zu Grunde, ein leistungsverzweigtes Getriebe für einen Fahrantrieb zu schaffen, das besser an fahrbereichsspezifische Anforderungen anpassbar ist. Weiterhin liegt der Erfindung die Aufgabe zu Grunde, ein Steuerverfahren für ein solches Getriebe zu schaffen.

Die erste Aufgabe wird gelöst durch ein leistungsverzweigtes Getriebe mit den Merkmalen des Patentanspruchs 1, die zweite Aufgabe wird gelöst durch ein Verfahren mit den Merkmalen des Patentanspruchs 9.

Vorteilhafte Weiterbildungen der Erfindung sind in den abhängigen Patentansprüchen 2 bis 8 und 10 bis 11 beschrieben.

Ein leistungsverzweigtes Getriebe für einen Fahrantrieb, insbesondere einer mobilen Arbeitsmaschine, beispielsweise eines Radladers, hat eine Eingangswelle die mit einer Antriebsmaschine des Fahrantriebs koppelbar ist. Weiterhin hat es einen hydraulischen Leistungszweig mit einer mit der Eingangswelle koppelbaren, insbesondere gekoppelten Hydropumpe, die mit verstellbarem Verdrängungsvolumen ausgebildet ist. Der hydraulische Leistungszweig hat weiterhin einen mit der Hydropumpe über eine erste und eine zweite Arbeitsleitung fluidisch verbindbaren Hydromotor, sodass Pumpe und Motor in einem geschlossenen hydraulischen Kreis betreibbar sind. Über den hydraulischen Leistungszweig ist, wie bereits weiter oben erwähnt, das gesamte Übersetzungsverhältnis des leistungsverzweigten Getriebes stufenlos variierbar. Das Getriebe weist zudem einen weiteren, insbesondere mechanischen Leistungszweig auf, der ebenfalls mit der Eingangswelle koppelbar, insbesondere gekoppelt ist. Über ein insbesondere proportionales, besonders bevorzugt elektroproportionales Steuerventil des Getriebes ist eine hydraulische Stellvorrichtung der Hydropumpe in Abhängigkeit eines Fahrgeschwindigkeitsollwertes zur Verstellung eines Verdrängungsvolumens der Hydropumpe mit Steuerdruckmittel beaufschlagbar. Dabei ist die Hydropumpe derart ausgestaltet, dass ein Arbeitsdruck des Hydromotors oder ein davon abgeleiteter Druck in Richtung einer Verkleinerung des Verdrängungsvolumens wirksam ist. Erfindungsgemäß weist das Getriebe eine Druckregelvorrichtung auf, über die ein Steuerdruck des Steuerdruckmittels, insbesondere durch Ansteuerung einer Steuereinrichtung des Getriebes oder des Fahrantriebes, auf einen von einem Fahrbereich des Getriebes oder Fahrantriebs abhängigen Sollwert einstellbar beziehungsweise regelbar ist.

Da Fahrbereiche insbesondere über ein gefordertes Drehmoment und eine geforderte Verstelldynamik des Verdrängungsvolumens und somit des Übersetzungsverhältnisses definiert sind, und beide Größen im Wesentlichen vom von der Stellvorrichtung bereitgestellten Steuerdruck abhängen, ist über die erfindungsgemäße Einstellung des Steuerdrucks ein Getriebe geschaffen, das auf vorrichtungstechnisch einfache Weise an fahrbereichsspezifische Anforderungen anpassbar ist.

Die in den hydrostatischen und den mechanischen Leistungspfad verzweigbare Eingangsleistung ist vorzugsweise über einen Summierabschnitt zu einer Ausgangsleistung des Getriebes summierbar. Bevorzugt ist das Getriebe eingangsgekoppelt ausgeführt, wobei die Verzweigung über eine Zahnradstufe und der Summierabschnitt über ein Planetengetriebe ausgebildet ist. In diesem Fall stellt sich an der Verzweigung ein festes Drehzahlverhältnis und an der Summierung ein festes Momentenverhältnis ein. Alternativ dazu ist das Getriebe ausgangsgekoppelt ausgeführt, wobei die Verzweigung über ein Planetengetriebe und der Summierabschnitt über eine Zahnradstufe ausgebildet ist. Dann stellt sich an der Verzweigung ein festes Momentenverhältnis und an der Summierung ein festes Drehzahlverhältnis ein. Alternativ dazu kann das Getriebe aufbauend auf diesen Konzepten eine Mischarchitektur aufweisen.

Vorzugsweise weist das Getriebe eine äußere Leistungsverzweigung auf.

Vorzugsweise ist das Getriebe mit einer Steuerdruckmittelquelle im Wesentlichen konstanten Versorgungsdrucks, insbesondere mit einem Druckmittelausgang eines mit einer Speisepumpe verbindbaren Druckreduzierventils verbindbar. Alternativ oder ergänzend zum Druckreduzierventil kann der Versorgungsdruck über ein Druckbegrenzungsventil eingestellt sein. Der Versorgungsdruck beträgt vorzugsweise mehr als 25 bar.

Es wird bevorzugt, dass die Druckregelvorrichtung in einem Druckmittelströmungspfad angeordnet ist, über den die Steuerdruckmittelquelle, insbesondere das Druckreduzierventil, mit der hydraulischen Stellvorrichtung der Hydropumpe verbindbar ist.

Vorzugsweise ist die Druckregelvorrichtung dem Steuerventil fluidisch in Reihe vorgeschaltet, so dass zunächst der Steuerdruck auf den vom Fahrbereich abhängigen Sollwert eingestellt wird, bevor die Stellvorrichtung über das Steuerventil mit dem Steuerdruckmittel beschickt wird. Außer im Falle eines voll geöffneten Steuerventils, wenn beispielsweise eine hohe Fahrgeschwindigkeit und damit verbunden ein großes Verdrängungsvolumen der den Hydromotor antreibenden Hydropumpe angefordert wird, wird der aus der Druckregelvorrichtung austretende Steuerdruckmittelvolumenstrom vom Steuerventil nochmals angedrosselt, bevor er in die Stellvorrichtung gelangt. Alternativ dazu ist es denkbar, die Reihenschaltung umgekehrt vorzusehen.

Der Arbeitsdruck entspricht vorzugsweise dem Druck in derjenigen Arbeitsleitung, über die im zugeordneten Fahrbereich ein Zulauf von der Hydropumpe zum Hydromotor ausgebildet ist.

Vorzugsweise ist die Hydropumpe derart ausgestaltet, dass sie den Hydromotor in beiden Fahrtrichtungen antreiben kann, so dass jede der Arbeitsleitungen je nach Fahrtrichtung als Zulauf oder als Rücklauf ausgebildet sein kann.

Der Sollwert des Steuerdrucks ist in Abhängigkeit von eine maximal zulässige Absinkrate einer Drehzahl der Antriebsmaschine, insbesondere zur Vermeidung eines Absterbens beziehungsweise Abwürgens der Antriebsmaschine, ermittelbar.

Gemäß der vorangegangenen Beschreibung ist über den Arbeitsdruck eine direkte hydraulische Rückkopplung der momentan wirkenden Antriebslast im Sinne der Verkleinerung des Verdrängungsvolumens gegeben. Dem entgegen wirkt die mit dem Steuerdruckmittel beaufschlagte Stellvorrichtung im Sinne einer Vergrößerung des Verdrängungsvolumens. In einem Gleichgewichtszustand, wenn der Steuerdruck und der entgegenwirkende Arbeitsdruck in einem Verstellmoment von null resultieren, bleibt das Verdrängungsvolumen konstant. Der dem Arbeitsdruck entgegenwirkende Steuerdruck ist somit ein Maß dafür, ab welchem Arbeitsdruck das Verdrängungsvolumen der Hydropumpe verkleinert wird. Anders ausgedrückt ist über die Einstellung des Steuerdrucks der Arbeitsdruck und damit ein Drehmoment und damit bei gegebener Drehzahl auch eine Leistung begrenzbar.

Je geringer dabei der Sollwert beziehungsweise der demgemäß eingestellte Steuerdruck ist, umso schneller kann eine Verkleinerung des Verdrängungsvolumens bei Lastspitzen erfolgen. Die dabei erreichbare Regelgeschwindigkeit übersteigt die einer herkömmlichen elektroproportionalen Volumenstromregelung, so dass die oben genannten Bedingungen zuverlässiger zu erfüllen sind.

So kann über die erfindungsgemäße Druckregelvorrichtung beispielsweise in Fahrbereichen, in denen eine Geschwindigkeitsregelung bei hoher Stelldynamik gefordert ist, der maximale Versorgungsdruck als Steuerdruck bereitgestellt werden. In anderen Fahrbereichen, in denen beispielsweise nur geringe Geschwindigkeiten gefordert sind aber schlagartig erhöhte Fahrwiderstände auftreten können, beispielsweise während einer Arbeitsfahrt, kann der Steuerdruck auf ein geringes Niveau eingestellt werden. Durch das geringere Niveau und die direkte hydraulische Rückkopplung des Arbeitsdruckes auf die Verstellung ist die Antriebsmaschine des Fahrantriebs somit besser gegen ein Abwürgen schützbar, da das Verdrängungsvolumen und mit diesem das Drehmoment der Eingangswelle verglichen mit dem Stand der Technik schneller verkleinerbar ist.

Der Fahrbereich ist vorzugsweise über ein Intervall eines Übersetzungsverhältnisses einer Abtriebsdrehzahl des Getriebes zu einer Drehzahl der Eingangswelle des Getriebes, was einem Geschwindigkeitsintervall des Fahrantriebs entspricht, definiert. In dem Fahrbereich können genau ein Leistungszweig oder mehrere Leistungszweige zur Abtriebsleistung des Getriebes beitragen. Im erstgenannten Fall wird der Fahrbereich als unverzweigt, im letztgenannten Fall als leistungsverzweigt bezeichnet. Intervalle können sich überschneiden oder können voneinander getrennt sein.

Vorzugsweise ist die Hydropumpe als eine verstellbare Axialkolbenpumpe in Schrägscheibenbauweise ausgebildet. Diese weist mit einer Triebwelle umlaufende Arbeitskolben auf, die an einer um eine Schwenkachse verschwenkbaren Schrägscheibe abgestützt sind. Die Triebwelle ist vorzugsweise mit der Eingangswelle des Getriebes mechanisch koppelbar, insbesondere gekoppelt. Vorzugsweise ist die Schrägscheibe von der Stellvorrichtung mit einem Abstand zur Schwenkachse angelenkt. Über eine Steuerscheibe, die von wenigstens zwei Drucknieren durchsetzt ist, sind von den Arbeitskolben begrenzte, hydraulische Arbeitsräume der Axialkolbenpumpe alternierend mit deren Niederduck- und Hochdruckanschluss und über diese mit den vorbeschriebenen Arbeitsleitungen in Druckmittelverbindung bringbar.

Um den Hydromotor wie bereits erwähnt in beiden Fahrtrichtungen antreiben zu können, ist die verstellbare Axialkolbenpumpe vorzugsweise durchschwenkbar ausgestaltet. Dass der Arbeitsdruck oder der davon abgeleitete Druck dabei wie bereits erwähnt in Richtung der Verkleinerung des Verdrängungsvolumens wirksam ist, wird bei dieser Bauform vorrichtungstechnisch vorzugsweise dadurch erzielt, dass eine Querschnittsfläche zumindest einer der Drucknieren ungleich zu beiden Seiten einer von der Drehachse und der Schwenkachse aufgespannten Ebene verteilt angeordnet ist. Am einfachsten ist dies durch eine um die Längsachse verdrillt angeordnete Steuerscheibe realisiert. Dadurch sind an der Schrägscheibe angreifenden Abstützkräfte der Arbeitskolben bezüglich der Ebene, beziehungsweise der Schwenkachse, nicht mehr ausgeglichen sondern resultieren in einem rückstellenden Schwenkmoment, so dass die resultierende Abstützkraft der Arbeitskolben in Richtung des Verkleinerung des Verdrängungsvolumens wirksam ist. Je stärker die Verdrillung ist, umso stärker ist das rückstellende Moment.

Die Stellvorrichtung ist vorzugsweise als ein doppeltwirkender Gleichgangszylinder mit zwei durch dessen Kolben getrennten, entgegengesetzt wirksamen Arbeitsräumen. Vorzugsweise ist der Kolben über zwei Federn in eine der Neutralstellung der Hydropumpe entsprechende Neutralstellung vorgespannt. Der Gleichgangszylinder ist dabei vorzugsweise derart ausgestaltet, dass bei Verstellung immer nur eine der Federn wirksam ist.

Der Kolben des Gleichgangszylinders ist zur Rückmeldung des eingestellten Verdrängungsvolumens, insbesondere der Position der Schrägscheibe, vorzugsweise über eine Koppelvorrichtung, insbesondere ein Koppelgestänge oder eine Koppelfeder, mit einem Ventilkörper des Steuerventils koppelbar, insbesondere gekoppelt.

Besonders flexibel ist das Getriebe ausgestaltet, wenn in einer Weiterbildung des Getriebes die Hydropumpe und der Hydromotor derart ausgestaltet sind, dass sie sowohl im Pumpen- als auch im Motorbetrieb betreibbar sind.

Da eine Drehzahl der Eingangswelle des Getriebes ein wichtiger Indikator für eine Stabilität eines Betriebspunktes der Antriebsmaschine ist, ist in einer vorteilhaften Weiterbildung der Steuerdruck über die Druckregelvorrichtung in Abhängigkeit einer Drehzahl der Eingangswelle oder einer davon ableitbaren Drehzahl, die insbesondere eine Drehzahl der Antriebsmaschine ist, einstellbar. Dies erfolgt vorzugsweise über die Steuereinrichtung.

Hierzu weist das Getriebe vorzugsweise eine Drehzahlerfassungseinheit auf, über die die Drehzahl der Eingangswelle oder die davon ableitbare Drehzahl erfassbar ist.

Um das Getriebe noch besser an die Anforderungen des Fahrbereichs anpassen zu können, ist in einer vorteilhaften Weiterbildung der Steuerdruck über die Druckregelvorrichtung zusätzlich in Abhängigkeit vom Arbeitsdruck oder dem davon abgeleiteten Druck einstellbar. Dies erfolgt vorzugsweise über die Steuereinrichtung.

In einer dazu alternativen Variante ist der Steuerdruck über die Druckregelvorrichtung nur in Abhängigkeit des Fahrbereichs und des Arbeitsdrucks oder des von diesem abgeleiteten Drucks einstellbar, so dass die Drehzahl im Sollwert folglich unberücksichtigt bleibt.

Zur Erfassung des Arbeitsdrucks oder des abgeleiteten Drucks weist das Getriebe vorzugsweise wenigstens eine Druckerfassungseinheit auf.

In einer bevorzugten Weiterbildung ist der Fahrbereich, in dessen Abhängigkeit die erfindungsgemäße Einstellung erfolgt, rein hydrostatisch oder er ist leistungsverzweigt und die Hydropumpe arbeitet im Pumpenbetrieb.

Vorzugsweise ist ein Drehzahlbereich der Eingangswelle im hydrostatischen oder überwiegend hydrostatischen Fahrbereich der einer bestimmungsgemäßen Arbeitsfahrt des Fahrantriebs. Die Arbeitsfahrt zeichnet sich dabei durch eine niedrige Fahrgeschwindigkeit und / oder durch ein geringes Übersetzungsverhältnis des Getriebes und / oder durch eine Aktivierung eines Arbeitsgerätes des den Fahrantrieb aufweisenden Fahrzeugs aus. Insbesondere bei Verwendung eines Arbeitsgerätes kann es im Fahrbetrieb zu sprunghaftem Anstieg der äußeren Last und damit des Arbeitsdruckes kommen, wobei dann der Steuerdruck vorzugsweise auf einen geringen Sollwert einstellbar ist, sodass ein Absterben der Antriebsmaschine verhindert ist.

Die Druckregelvorrichtung weist vorzugsweise einen Druckmitteleingang, der mit einer Steuerdruckmittelquelle, insbesondere mit einem Druckmittelausgang eines an eine Speisepumpe angeschlossenen Druckreduzierventils verbindbar ist, und einen Druckmittelausgang, der mit einem Druckmitteleingang des Steuerventils verbindbar, insbesondere verbunden ist, auf.

In einer besonders bevorzugten Weiterbildung ist die Druckregelvorrichtung über ein Druckregelventil, insbesondere ein Druckreduzierventil ausgebildet oder weist dieses auf. Das Druckregel- oder Druckreduzierventil weist dabei als Vorteile einen vorrichtungstechnisch einfachen Aufbau und ein stabiles und schnelles Regelverhalten auf. Das Druckregelventil ist vorzugsweise proportional, insbesondere elektromagnetisch proportional, insbesondere über die Steuereinrichtung betätigbar.

In einer bevorzugten Weiterbildung ist ein Ventilkörper des Druckregelventils, insbesondere über eine Feder in eine Sperrstellung vorspannbar, so dass über das Druckregelventil beim Ausfall einer Steuerenergieversorgung kein Steuerdruckmittel mehr bereitgestellt wird und das Verdrängungsvolumen vom rückstellend wirksamen Arbeitsdruck bis hin zu null reduzierbar ist. Auf diese Weise ist eine Abtriebsdrehzahl des hydraulischen Leistungszweiges beim Ausfall der Steuerenergie null und der Antrieb kommt zumindest im rein hydraulischen Fahrbereich zum Stehen. In Öffnungsrichtung hingegen ist der Ventilkörper mit einem dem Sollwert entsprechenden Druckäquivalent und einem an seinem Druckmittelausgang anstehenden Istwert des Steuerdrucks beaufschlagbar. Über das so ausgebildete Druckregelventil erfolgt eine rein hydraulische, schnelle und sichere Regelung des Steuerdruckes. Ist das Druckregelventil elektromagnetisch betätigbar entspricht dem Sollwert ein Sollwertsignal in Form eines Stellstromes eines Elektromagneten des Druckregelventils.

In einer besonders bevorzugten Weiterbildung hat das Getriebe eine Steuereinrichtung, die derart ausgestaltet ist, dass über sie der Sollwert ermittelbar und die Druckregelvorrichtung mit einem Sollwertsignal ansteuerbar ist. Vorzugsweise ist dabei der Sollwert in Abhängigkeit von wenigstens einer der bereits aufgezählten vier Bedingungen ermittelbar.

Vorzugsweise ist die Steuereinrichtung mit dem Steuerventil und der Druckregelvorrichtung signalverbindbar, insbesondere signalverbunden, sodass über sie sowohl die Steuerung des Steuerventils als auch die Einstellung des Steuerdrucks erfolgen kann.

In einer besonders vorteilhaften Weiterbildung des Getriebes ist die Steuereinrichtung derart ausgestaltet, dass über sie, insbesondere über die Ansteuerung der Druckregelvorrichtung gemäß dem Sollwert und die Ansteuerung des Steuerventils gemäß dem Fahrgeschwindigkeitssollwert, ein Drehmoment der Hydropumpe und / oder eine Leistung der Hydropumpe begrenzbar ist.

Zur Einstellung des Sollwertes über die Steuereinrichtung ist in dieser in einer besonders bevorzugten Weiterbildung ein Kennfeld abgelegt, in dem der Sollwert in Abhängigkeit des Fahrbereichs und / oder in Abhängigkeit einer Drehzahl der Eingangswelle oder einer davon ableitbaren Drehzahl und / oder in Abhängigkeit des Arbeitsdrucks hinterlegt ist.

Vorzugsweise ist die Steuereinrichtung derart ausgestaltet, dass über sie die Druckregelvorrichtung zumindest in anderen Fahrbereichen als dem hydrostatischen oder überwiegend hydrostatischen in eine insbesondere ungeregelte Durchflussstellung mit im Wesentlichen konstanten Öffnungsquerschnitt verstellbar ist.

Vorteilhafter Weise ist die Steuereinrichtung mit einem Fahrtgeschwindigkeitsgeber signalverbindbar. Sie kann dabei mit dem Fahrtgeschwindigkeitsgeber unmittelbar beziehungsweise direkt oder mittelbar, beispielsweise über eine Steuereinrichtung des Fahrantriebs oder Fahrzeugs, verbindbar sein. Der Fahrtgeschwindigkeitsgeber ist beispielsweise ein Fahrpedal oder Joystick des Fahrantriebs oder Fahrzeugs.

Es wird bevorzugt, dass das Steuerventil als ein stetig verstellbares 4/3-Wegeventil mit einer federzentrierten Mittelsperrstellung und mit einer ersten Versorgungsstellung und einer zweiten Versorgungsstellung ausgebildet ist.

Der Druckmittelausgang des Druckregelventils ist vorzugsweise über die erste Versorgungsstellung mit dem ersten und über die zweite Versorgungsstellung mit dem zweiten Arbeitsraum der Stellvorrichtung verbindbar, insbesondere verbunden. Ein Tank oder ein Sumpf ist vorzugsweise über die erste Versorgungsstellung mit dem zweiten und über die zweite Versorgungsstellung mit dem ersten Arbeitsraum der Stellvorrichtung verbindbar, insbesondere verbunden. Über die Mittelsperrstellung sind aus Sicherheitsgründen vorzugsweise beide Arbeitsräume der Stellvorrichtung gedrosselt mit dem Tank verbindbar, insbesondere verbunden.

In einer bevorzugten Weiterbildung ist die Steuereinrichtung derart ausgestaltet, dass über sie die Druckregelvorrichtung zumindest in einem anderen Fahrbereich als dem rein hydrostatischen oder überwiegend hydrostatischen in eine ungeregelte Durchflussstellung verstellbar, insbesondere verstellt ist, wodurch in diesem anderen Fahrbereich der Stellvorrichtung der Hydropumpe zumindest bei voll geöffneter Versorgungsstellung des Steuerventils der maximale Steuerdruck zur Verstellung des Verdrängungsvolumens und damit die volle Dynamik zur Verfügung steht.

In einer bevorzugten Weiterbildung ist die Steuereinrichtung zudem mit einem Fahrtrichtungsgeber des Fahrantriebs oder Fahrzeugs signalverbindbar. Dieser weist vorzugsweise die Stellungen Vorwärtsfahrt, Rückwärtsfahrt und Leerlauf auf.

In einer weiteren bevorzugten Weiterbildung ist der Sollwert über die Druckregelvorrichtung zudem in Abhängigkeit der Stellungen des Fahrtrichtungsgebers einstellbar.

Ein Verfahren zur Einstellung des Steuerdrucks eines leistungsverzweigten Getriebes, das gemäß der vorangegangenen Beschreibung ausgestaltet ist, weist erfindungsgemäß Schritte "Bestimmen des Fahrbereichs" und "Einstellen des Steuerdruckes in Abhängigkeit des bestimmten Fahrbereichs über die Druckregelvorrichtung" auf.

Das Verfahren weist für das Getriebe, den Fahrantrieb und das Fahrzeug die bereits eingehend erläuterten Vorteile auf, weshalb an dieser Stelle auf eine erneute Vorteilsnennung verzichtet wird.

In einer bevorzugten Weiterbildung des Verfahrens umfasst der Schritt "Einstellen des Steuerdruckes in Abhängigkeit des bestimmten Fahrbereichs über die Druckregelvorrichtung" Schritte "Erfassen einer Drehzahl der Eingangwelle oder einer davon ableitbaren Drehzahl durch eine Drehzahlerfassungseinheit", "Ermitteln des Sollwertes des Steuerdrucks in Abhängigkeit der Drehzahl" und "Ansteuern der Druckregelvorrichtung mit einem Sollwertsignal".

In einer einfachen Weiterbildung des Verfahrens erfolgt der Schritt "Ermitteln des Sollwertes in Abhängigkeit der Drehzahl" durch einen Schritt "Ermitteln des Sollwertes aus einem Kennfeld". Danach erfolgt der bereits erwähnte Schritt "Übergabe des Sollwertsignals der Steuereinrichtung an die Druckregelvorrichtung".

Da eine Reduzierung des Steuerdrucks wie bereits dargelegt mit einem Verlust an Verstelldynamik der bereits beschriebenen Stellvorrichtung und einem Verlust an Fahrdynamik einhergeht, kann es vorteilhaft sein, den aus dem Kennfeld ermittelten Sollwert zu korrigieren. Ein bevorzugtes Kriterium, ob für einen aktuellen Fahrzustand diese Korrektur vorteilhaft ist, ist dabei der aktuell vorliegende Arbeitsdruck oder der davon abgeleitete Druck. Eine vorteilhafte Weiterbildung des Verfahrens weist daher einen Schritt "Erfassen des Arbeitsdrucks durch eine Druckerfassungseinheit" auf. Dieser Schritt ist dabei vorzugsweise innerhalb eines hinreichend kleinen, den Schritt "Erfassen der Drehzahl der Eingangwelle oder der davon ableitbaren Drehzahl durch die Drehzahlerfassungseinheit" umgebenden Zeitintervalls auszuführen. Im Anschluss an den Schritt "Ermitteln des Sollwertes aus dem Kennfeld" erfolgen bei dieser Weiterbildung dann Schritte "Ermitteln eines Grenzarbeitsdrucks in Abhängigkeit der Drehzahl aus einem Kennfeld", "Ermitteln einer Abweichung des Arbeitsdrucks vom Grenzarbeitsdruck" und "Korrektur des Sollwertes in Abhängigkeit der Abweichung". Danach erfolgt der bereits erwähnte Schritt "Ansteuern der Druckregelvorrichtung mit einem Sollwertsignal".

Vorzugsweise erfolgen die Schritte "Ermitteln ..." und "Ansteuern ..." über die vorbeschriebene Steuereinrichtung des Getriebes.

Diese Steuereinrichtung weist vorzugsweise eine Speichereinheit, in der ein Verfahren, das gemäß der vorangegangenen Beschreibung ausgestaltet ist zur Ausführung gespeichert ist und eine Prozessoreinheit, über die das Verfahren ausführbar ist, auf.

Im Folgenden werden je ein Ausführungsbeispiel eines erfindungsgemäßen Getriebes und Verfahrens anhand von fünf Figuren näher erläutert. Es zeigen:
Figur 1 ein Getriebeschema eines Ausführungsbeispiels eines leistungsverzweigten Getriebes eines Fahrantriebes in einer Übersicht
Figur 2 einen hydraulischen Schaltplan eines hydrostatischen Zweiges des Getriebes gemäß Figur 1 in einer Detailansicht
Figur 3 ein Flussdiagramm eines Ausführungsbeispiels eines Verfahrens
Figur 4 ein Steuerkennfeld der Ausführungsbeispiele gemäß den Figuren 1 bis 3
Figur 5 einen Steuerdruckverlauf der Ausführungsbeispiele in Abhängigkeit von Fahrbereichen

Zur einfacheren Orientierung werden im Folgenden figurübergreifend für gleiche Komponenten gleichbleibende Bezugszeichen verwendet.

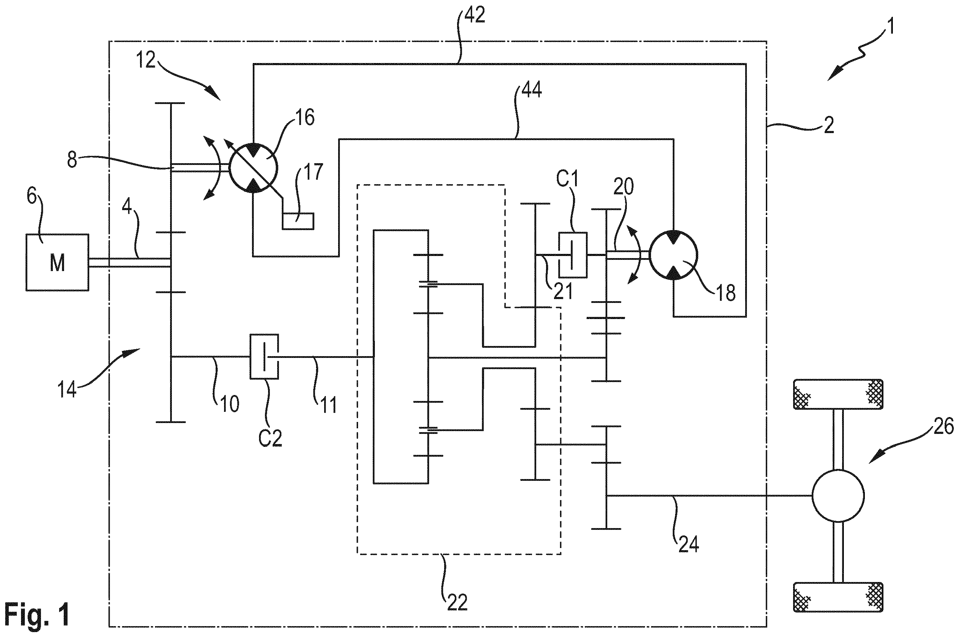

Gemäß Figur 1 ist ein eingangsgekoppeltes, leistungsverzweigtes Getriebe 2 in einem Fahrantrieb 1 eines Fahrzeugs beispielsweise eines Radladers vorgesehen. Das Getriebe 2 hat eine Eingangswelle 4, die mit einer Antriebsmaschine beziehungsweise einer Antriebsmaschine 6 verbunden ist. Diese ist vorzugsweise als Verbrennungskraftmaschine, insbesondere als Dieselmotor ausgebildet und mit einer nicht dargestellten Steuereinrichtung des Fahrantriebs verbindbar. Über eine jeweilige Zahnradpaarung ist die Eingangswelle 4 mit Eingangswellen 8, 10 verbunden, wobei die Eingangswelle 8 einem hydraulischen Leistungszweig 12 und die Eingangswelle 10 einem weiteren, mechanischen Leistungszweig 14 zugeordnet sind. Der hydraulische Leistungszweig 12 weist eine verstellbare Hydropumpe 16 mit einer hydraulischen Stellvorrichtung 17 zur Verstellung ihres Verdrängungsvolumens und einen konstant ausgeführten Hydromotor 18 auf, wobei beide über eine erste und eine zweite Arbeitsleitung 42, 44 fluidisch verbunden und bestimmungsgemäß in einem geschlossenen Kreis betreibbar sind. Die Hydropumpe 16 ist als durchschwenkbare Axialkolbenmaschine in Schrägscheibenbauweise mit verdrillter Steuerscheibe ausgeführt, wie sie beispielsweise im Datenblatt RE 92004/12.11 der Bosch Rexroth AG gezeigt wird. Der Hydromotor 18 ist als Axialkolbenmaschine in Schrägachsenbauweise ausgeführt, wie er beispielsweise im Datenblatt RE 91610/01.12 der Bosch Rexroth AG gezeigt wird. Die Hydropumpe 16 wird dabei über die Eingangswelle 8 angetrieben. Der Hydromotor 18 hat eine Ausgangswelle 20. Diese kann über eine erste Kupplung C1 mit einem Summierabschnitt 22 des Getriebes 2 verbunden werden. Der Summierabschnitt 22 ist dabei als Planetengetriebe ausgebildet.

Die Eingangswelle 10 des mechanischen Leistungszweigs 14 kann über eine zweite Kupplung C2 mit dem Summierabschnitt 22 verbunden werden. Ein Ausgang des Summierabschnitts 22 ist mit einer Abtriebswelle 24 des Getriebes 2 verbunden, die eine Achseinheit 26 des Fahrantriebs 1 antreibt.

In einem ersten, hydraulischen Fahrbereich des Getriebes 2 erfolgt eine Leistungsübertragung von der Antriebsmaschine 6 hin zur Abtriebswelle 24 lediglich über den hydraulischen, ersten Leistungszweig 12. Hierzu ist die erste Kupplung C1 geschlossen und die zweite Kupplung C2 geöffnet. In einem zweiten, leistungsverzweigten Fahrbereich erfolgt die Leistungsübertragung über beide Leistungszweige 12, 14, wobei beide Kupplungen C1, C2 geschlossen sind. In einem dritten Fahrbereich erfolgt die Leistungsübertragung ausschließlich über die Kupplung C2, beziehungsweise den mechanischen, zweiten Leistungszweig 14.

Für eine eingehende Beschreibung des Fahrantriebs 1, insbesondere des Aufbaus und der Funktion des Getriebes 2, sei zum Zwecke der Offenbarung auf die Offenlegungsschriften DE 10 2007 037 107 A1 und DE 10 2007 037 664 A1 verwiesen. Dabei ist zu berücksichtigen, dass der dort gezeigte Hydromotor anders als in den hier gezeigten Ausführungsbeispielen nicht konstant, sondern verstellbar ausgebildet ist.

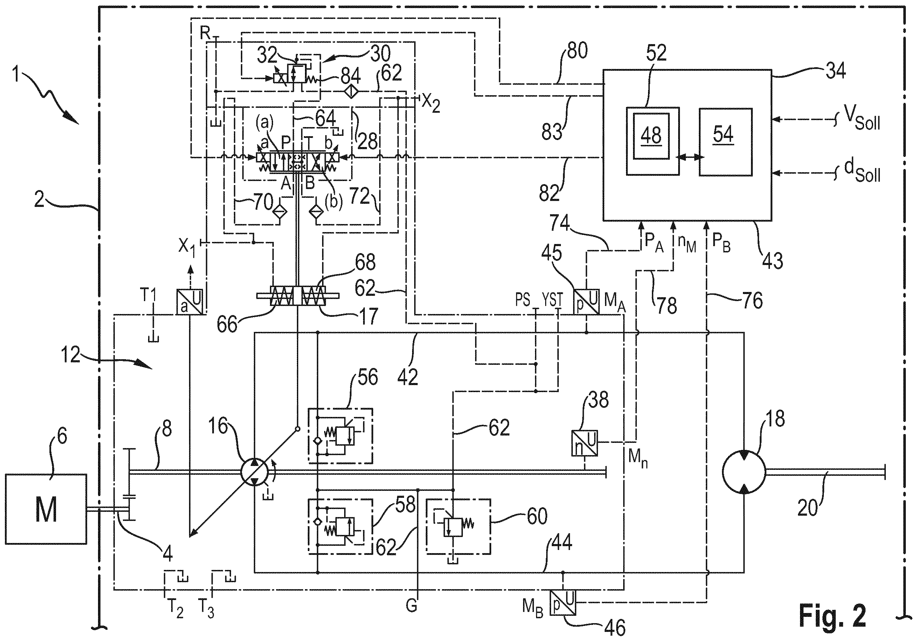

Figur 2 zeigt eine Detailansicht des Getriebes 2 gemäß Figur 1 zur genaueren Darstellung des hydraulischen Leistungszweigs 12. Auf die Darstellung des mechanischen Leistungszweigs 14, des Getriebesummierabschnitts 22 und der Achseinheit 26 gemäß Figur 1 wird dabei aus Gründen der Übersichtlichkeit verzichtet. Die Stellvorrichtung 17 ist als doppeltwirkender Gleichgangszylinder ausgebildet, wobei dessen Kolben mit einer nicht dargestellten Schwenkwiege der Hydropumpe 16 gekoppelt ist. Das Getriebe weist ein Steuerventil 28 auf, das als elektromagnetisch betätigbares 4/3-Proportionalwegeventil ausgestaltet ist. Weiterhin hat das Getriebe 2 eine als Druckreduzierventil ausgestaltete Druckregelvorrichtung 30. Zur Begrenzung des Arbeitsdruckes p_{A} beziehungsweise p_{B} in der ersten und zweiten Arbeitsleitung 42, 44 hat das Getriebe 2 zwei Druckbegrenzungsventile 56, 58 mit Nachsaugfunktion. Das Druckbegrenzungsventil 56 ist dabei mit der ersten Arbeitsleitung 42 und das Druckbegrenzungsventil 58 mit der zweiten Arbeitsleitung 44 verbunden. An die Arbeitsleitungen 42, 44 sind Einheiten 45, 46 über Messanschlüsse M_{A}, M_{B} angeschlossen. Weiterhin ist eine Drehzahlerfassungseinheit 38 vorgesehen, über die die Drehzahl der Eingangswelle 8 der Hydropumpe 16 erfassbar ist. Aus der so erfassten Drehzahl ist die Drehzahl der Eingangswelle 4 des Getriebes 2 ableitbar. Die Hydropumpe 16 weist weiterhin eine Schwenkwinkelerfassungseinheit auf.

Über einen Steuerdruckanschluss G ist das Getriebe 2 mit einer Speisepumpe verbindbar (nicht dargestellt), über die der Steuerdruckanschluss G in einem bestimmungsgemäßen Betrieb mit Steuerdruckmittel beaufschlagbar ist. Ein Versorgungsdruck p_{St} ist über ein Druckbegrenzungsventil 60 des Getriebes 2 begrenzt und somit etwa konstant. Der an dem Druckbegrenzungsventilen 56, 58 eingestellte Wert beträgt in diesem Ausführungsbeispiel 500 bar, der des Druckbegrenzungsventils 60 35 bar. Der Versorgungsanschluss G ist über eine Versorgungsleitung 62 mit einem Druckmitteleingang der Druckregelvorrichtung 30 verbunden. Deren Druckmittelausgang 32 ist über eine Druckmittelleitung 64 mit einem Druckanschluss P des Steuerventils 28 verbunden. Dieses hat einen Tankanschluss T, der mit einem Tank T verbunden ist. Das Steuerventil 28 weist zwei Arbeitsanschlüsse A, B auf, wobei der Arbeitsanschluss A mit einem ersten Arbeitsraum 66 und der zweite Arbeitsanschluss B mit einem zweiten Arbeitsraum 68 der hydraulischen Stellvorrichtung 17 verbunden ist. Die Verbindung ist dabei jeweils über eine Arbeitsleitung 70, 72 ausgebildet.

Das Steuerventil 28 hat eine erste Versorgungsstellung (a), in der sein Druckanschluss P mit dem ersten Arbeitsanschluss A und sein Tankanschluss T mit dem zweiten Arbeitsanschluss B verbindbar ist. Entsprechend weist es eine zweite Versorgungsstellung (b) auf, über die die Druckmittelverbindungen über Kreuz, das heißt P mit B und T mit A ausbildbar sind. Die Hydropumpe 16 ist in diesem Ausführungsbeispiel derart ausgestaltet, dass eine Druckmittelbeaufschlagung des ersten Arbeitsraumes 66 aus einer Neutralstellung der Schwenkwiege heraus in Richtung einer Vergrößerung des Verdrängungsvolumens wirkt und die erste Arbeitsleitung 42 dann der Zulauf des Hydromotors und die zweite Arbeitsleitung 44 dessen Rücklauf ist. Bei Druckmittelbeaufschlagung des zweiten Arbeitsraumes 68 aus der Neutralstellung heraus dreht sich die Strömungsrichtung und damit die Drehrichtung des Hydromotors 18 um, wobei die zweite Arbeitsleitung 44 dann der Zulauf und die erste Arbeitsleitung 42 der Rücklauf ist. Die Hydromaschine 16 ist gemäß der vorangegangenen Beschreibung mit verdrillter Steuerscheibe ausgebildet, so dass der im jeweiligen Zulauf anstehende Arbeitsdruck p_{A} beziehungsweise p_{B} in Richtung einer Verkleinerung des Verdrängungsvolumens wirksam ist.

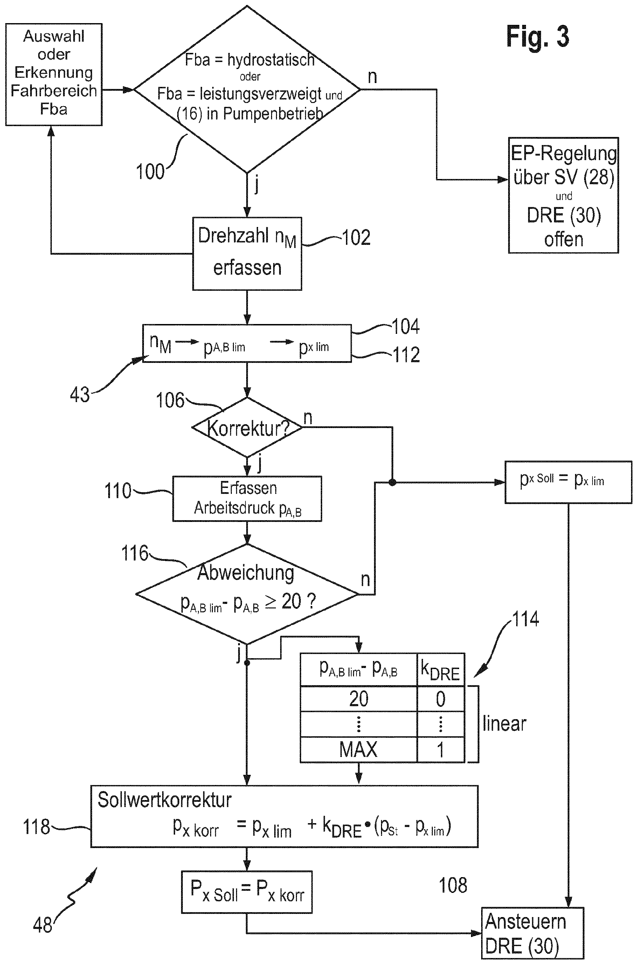

Weiterhin weist das Getriebe 2 eine Steuereinrichtung 34 auf, die über Signalleitungen 74, 76 mit den Druckerfassungseinheiten 45, 46 und über eine Signalleitung 78 mit der Drehzahlerfassungseinheit 38 verbunden ist. Als Eingangsgrößen werden der Steuereinrichtung 34 weiterhin über entsprechende Signalleitungen ein Fahrgeschwindigkeitssollwert vₛₒₗₗ und ein Fahrtrichtungssollwert dₛₒₗₗ übermittelt. Die Steuereinrichtung 34 hat eine Speichereinheit 52 und eine Prozessoreinheit 54. In der Speichereinheit 52 ist ein erfindungsgemäßes Verfahren 48, wie es anhand Figur 3 beschrieben wird, zur Ausführung gespeichert. Die Ausführung erfolgt dabei in der Prozessoreinheit 54. In der Speichereinheit 52 sind weiterhin ein Kennfeld 43 und ein Korrekturfeld 114 gemäß Figur 3 abgelegt.

Über Signalleitung 80, 82 ist die Steuereinrichtung 34 mit Elektromagneten a, b des Steuerventils 28 zur Betätigung in die Versorgungsstellungen (a), (b) verbunden. Über eine weitere Signalleitung 83 ist die Steuereinrichtung 34 zur erfindungsgemäßen Einstellung eines Sollwerts p_{x soll} des Steuerdrucks mit einem Elektromagneten der Druckregelvorrichtung 30 verbunden. Dabei ist ein Ventilkörper der Druckregelvorrichtung 30 in eine Sperrstellung über eine Feder 84 vorgespannt und in Öffnungsrichtung mit einem dem Sollwert p_{x soll} entsprechenden Druckäquivalent und einem an seinem Druckmittelausgang 32 anstehenden Ist-Wert des Steuerdrucks beaufschlagt. Die Steuereinrichtung 34 ist dabei derart ausgestaltet, dass in ihr ein erfindungsgemäßes Verfahren 48 zur Ausführung gespeichert ist.

Die folgende Beschreibung des Ausführungsbeispiels des Verfahrens erfolgt mit Bezug zu den Figuren 2 und 3. Das Verfahren 48 beginnt vorzugsweise mit einem Schritt 100 in dem eine Abfrage über den derzeit vorliegenden oder derzeit ausgewählten Fahrbereich des Getriebes 2 erfolgt. Dabei wird ermittelt, ob der Fahrbereich entweder hydrostatisch oder leistungsverzeigt, mit im Pumpenbetrieb arbeitender Hydropumpe 16 ausgebildet ist. Sollte der Fahrbereich keine der beiden Bedingungen erfüllen, so wird von einer Einstellung des Steuerdrucks auf einen vom vorgegebenen, im Wesentlichen konstanten Versorgungsdruck abweichenden Wert abgesehen, und die Steuerung der Druckmittelbeaufschlagung der Stellvorrichtung 17 gemäß Figur 2 erfolgt ausschließlich elektroproportional über das Steuerventil 28 anhand der vorgegebenen Sollwerte der Fahrtgeschwindigkeit vₛₒₗₗ und der Fahrtrichtung dₛₒₗₗ. In diesem Fall ist die Druckregelvorrichtung 30 gemäß Figur 2 voll geöffnet und regelt nicht.

Ist der Fahrbereich hingegen entsprechend hydrostatisch ausgebildet, erfolgt ein Schritt 102, in dem über die Drehzahlerfassungseinheit 38 die Drehzahl der Eingangswelle 8, aus der die Drehzahl der Eingangswelle des Getriebes 2 ableitbar ist, erfasst wird. In einem Folgeschritt 104 wird dann aus einem Kennfeld 43 in Abhängigkeit der erfassten Drehzahl n_{M} ein dieser zugeordneter, maximal zulässiger Grenzsteuerdruck p_{x lim} ermittelt.

Im Anschluss daran erfolgt ein Schritt 106, in dem abgefragt wird, ob dieser ermittelte Grenzsteuerdruck p_{x lim} der Druckregelvorrichtung 30 als Steuerdrucksollwert p_{x soll} übergeben werden soll oder ob er zur Verbesserung einer Stelldynamik der Stellvorrichtung 17 in Richtung des Versorgungsdrucks p_{St} erhöht werden soll. Ist das Ergebnis der Abfrage negativ, so erfolgt unmittelbar ein Schritt 108, über den der Druckregelvorrichtung 30 der Steuerdrucksollwert p_{x soll} als neuer Sollwert übergeben wird.

Ergibt die Abfrage im Schritt 106 hingegen, dass eine Korrektur durchgeführt werden soll, so erfolgt etwa zeitgleich mit dem Schritt 102 ein Schritt 110, in dem der Arbeitsdruck p_{A} beziehungsweise p_{B} in der den Zulauf zum Hydromotor 18 ausbildenden Arbeitsleitung erfasst wird. Zudem erfolgt ein Schritt 112, in dem aus dem Kennfeld 43 ein zulässiger maximaler Arbeitsdruck p_{A, B lim} ermittelt wird. Im Anschluss an beide Schritte erfolgt ein Schritt 116, in dem eine Abweichung aus p_{A, B lim} und dem erfassten Arbeitsdruck p_{A} beziehungsweise p_{B} ermittelt wird, die dann mit einem Referenzwert, in diesem Fall 20 bar, verglichen wird. Liegt die Differenz unterhalb von 20 bar, so wird der bis dahin ermittelte Grenzsteuerdruck p_{x lim} durch den Schritt 108 als neues Sollwertsignal des Steuerdrucks an die Druckregelvorrichtung 30 übergeben.

Im anderen Fall, wenn die Abweichung ≥ 20 bar beträgt, wird der Abweichung aus einem Korrekturfeld 114 ein Korrekturfaktor k_{DRE} zugeordnet, der in einem Folgeschritt 118 in die Berechnung eines korrigierten Steuerdrucks p_{Xkorr} eingeht. Im Folgenden ist dieser dann der neue Sollwert p_{x soll}, mit dem die Druckregelvorrichtung 30 angesteuert wird.

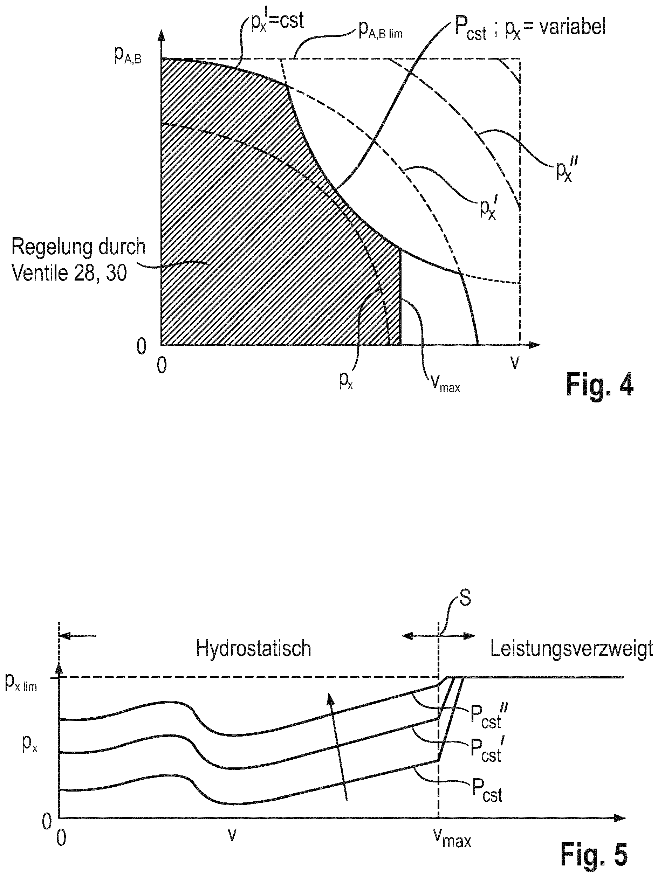

Figur 4 zeigt ein Regelverhalten des erfindungsgemäßen Getriebes 2 der vorangegangenen Beschreibung, bei dem einerseits über das Steuerventil 30 eine Steuerung beziehungsweise Regelung der Fahrgeschwindigkeit und andererseits über die Druckregelvorrichtung 30 eine Drehmomentbegrenzung und insofern auch eine Leistungsbegrenzung erfolgt. Beide Regelungen erfolgen somit überlagert. Im Diagramm gemäß Figur 4 ist der Arbeitsdruck p_{A} beziehungsweise p_{B} über dem Verdrängungsvolumen V der Hydropumpe 16 aufgetragen. Dabei sind für den hydrostatischen Fahrbereich einerseits der maximal zulässige Grenzarbeitsdruck p_{A,B lim} und für das Verdrängungsvolumen der Maximalwert durch entsprechende gestrichelte Linien gekennzeichnet. Ebenso sind im Diagramm Kurven konstanten Steuerdrucks pₓ, p_{x'}, p_{x"} eingezeichnet. Dabei nimmt der Steuerdruck von pₓ in Richtung p_{x"} zu. Weiterhin ist im Diagramm eine Kurve einer maximal zulässigen Leistung P_{cst} eingetragen. Diese Leistungskurve wird beispielsweise durch eine Fahrzeugsteuereinrichtung vorgegeben.

Im schraffiert dargestellten Bereich des Diagramms begrenzt somit die Druckregelvorrichtung 30 den Steuerdruck pₓ während zeitgleich das Steuerventil 28 eine präzise Geschwindigkeitskontrolle ermöglicht, sobald das Drehmoment beziehungsweise der Arbeitsdruck p_{A} beziehungsweise p_{B} unterhalb der limitierenden Grenzkurven liegt. Gleichzeitig wird das Getriebe 2 gegen Überlast geschützt.

Figur 5 zeigt ein Diagramm, in dem der Steuerdruck p_{X} über das Verdrängungsvolumen V der Hydropumpe 16 dargestellt ist. Im Diagramm sind Kurven konstanter Leistung P_{cst} dargestellt, wobei die Leistung in eingezeichneter Pfeilrichtung zunimmt. Gut zu erkennen ist, dass mit zunehmenden Verdrängungsvolumen eine konstant einzuhaltende Leistung eine Variation des Steuerdrucks erfordert, was erfindungsgemäß durch die Druckregelvorrichtung 30 erfüllt wird. Zusätzlich sind im Diagramm der maximal zulässige Steuerdruck p_{x lim} und das maximale Verdrängungsvolumen Vₘₐₓ im hydrostatischen Fahrbereich dargestellt. Dieser Fahrbereich erstreckt sich im Diagramm von einem Verdrängungsvolumens V=0 bis hin zum Verdrängungsvolumen Vₘₐₓ. Jenseits davon erfolgt die Leistungsübertragung leistungsverzweigt, was bedeutet, dass sowohl der hydrostatische als auch der mechanische Leistungszweig des Getriebes 2 zur Leistungsübertragung beitragen. In einem Übergangsbereich jenseits eines Schaltpunktes S, zu dem der mechanische Leistungszweig eingekuppelt wird, steigt der von der Druckregelvorrichtung 30 begrenzte beziehungsweise eingeregelte Steuerdruck p_{X} bis hin zu seinem Maximalwert, der dem des am Versorgungsanschluss G anstehenden Versorgungsdrucks p_{St} entspricht, an. Auf diese Weise ist ein sanfter Fahrbereichsübergang gegeben.

Offenbart ist ein leistungsverzweigtes Getriebe für einen Fahrantrieb, das einen hydraulischen und einen weiteren Leistungszweig aufweist. Zur Regelung einer Fahrgeschwindigkeit ist ein Verdrängungsvolumen einer Hydropumpe des hydraulischen Leistungszweigs über eine hydraulische Stellvorrichtung verstellbar. Zur Verstellung ist die Stellvorrichtung dabei über ein Steuerventil mit Steuerdruckmittel beaufschlagbar. Über eine zusätzliche Druckregelvorrichtung ist ein Steuerdruck des Steuerdruckmittels auf einen von einem Fahrbereich des Getriebes oder des Fahrantriebs abhängigen Sollwert einstellbar.

Offenbart ist weiterhin ein Verfahren zur Einstellung des Steuerdrucks.

### Bezugszeichenliste

- 1: Fahrantrieb
- 2: Getriebe
- 4: Eingangswelle
- 6: Antriebsmaschine
- 8: Eingangswelle hydraulischer Leistungszweig
- 10: Eingangswelle mechanischer Leistungszweig
- 12: hydraulischer Leistungszweig
- 14: mechanischer Leistungszweig
- 16: Hydropumpe
- 17: Stellvorrichtung
- 18: Hydromotor
- 20: Ausgangswelle
- 21: Eingangswelle
- 22: Summierabschnitt
- 24: Abtriebswelle
- 26: Achseinheit
- 28: Steuerventil
- 30: Druckregelvorrichtung
- 32: Druckmittelausgang
- 34: Steuereinrichtung
- 38: Drehzahlerfassungseinheit
- 42: erste Arbeitsleitung
- 43: Kennfeld
- 44: zweite Arbeitsleitung
- 45, 46: Druckerfassungseinheit
- 48: Verfahren
- 52: Speichereinheit
- 54: Prozessoreinheit
- 56, 58: Druckbegrenzungsventil mit Nachsaugfunktion
- 60: Druckbegrenzungsventil Versorgungsdruck
- 62: Versorgungsleitung
- 64: Druckmittelleitung
- 66: erster Arbeitsraum
- 68: zweiter Arbeitsraum
- 70, 72: Arbeitsleitung
- 74, 76, 78: Signalleitung
- 80, 82, 83 84: Feder

- 100: Schritt Bestimmung Fahrbereich
- 102: Schritt Erfassung Drehzahl
- 104: Schritt Ermittlung Sollwert aus Kennfeld
- 106: Schritt Abfrage Korrektur
- 108: Schritt Ansteuern Druckregelvorrichtung
- 110: Schritt Erfassung Arbeitsdruck
- 112: Schritt Ermittlung Grenzarbeitsdruck aus Kennfeld
- 114: Korrekturfeld
- 116: Schritt Ermittlung Abweichung
- 118: Schritt Korrektur Sollwert

- C1: erste Kupplung
- C2: zweite Kupplung

## Patentansprüche

1. Leistungsverzweigtes Getriebe für einen Fahrantrieb (1), wobei eine Eingangswelle (4) des Getriebes (2) mit einer Antriebsmaschine (6) des Fahrantriebs (1) koppelbar ist, mit einem hydraulischen Leistungszweig (12), der eine mit der Eingangswelle (4) koppelbare Hydropumpe (16) mit verstellbarem Verdrängungsvolumen und einen mit der Hydropumpe (16) über eine erste Arbeitsleitung (42) und eine zweite Arbeitsleitung (44) fluidisch verbindbaren Hydromotor (18) aufweist, und mit einem mit der Eingangswelle (4) koppelbaren weiteren Leistungszweig (14), und mit einem Steuerventil (28), über das eine hydraulische Stellvorrichtung (17) der Hydropumpe (16) in Abhängigkeit eines Fahrgeschwindigkeitsollwertes mit Steuerdruckmittel beaufschlagbar ist, wobei die Hydropumpe (16) derart ausgestaltet ist, dass ein Arbeitsdruck (p_{A}, p_{B}) des Hydromotors (18) oder ein davon abgeleiteter Druck in Richtung einer Verkleinerung des Verdrängungsvolumens wirksam ist, **gekennzeichnet durch** eine Druckregelvorrichtung (30), über die ein Steuerdruck des Steuerdruckmittels auf einen von einem Fahrbereich des Getriebes (2) oder Fahrantriebs (1) abhängigen Sollwert (p_{x soll}) einstellbar ist, und durch eine Steuereinrichtung (34), die derart ausgestaltet ist, dass über sie der Sollwert (p_{x soll}) wenigstens in Abhängigkeit einer maximal zulässigen Absinkrate einer Drehzahl der Antriebsmaschine (6) ermittelbar und die Druckregelvorrichtung (30) mit einem Sollwertsignal ansteuerbar ist.

2. Getriebe nach Patentanspruch 1, wobei der Steuerdruck über die Druckregelvorrichtung (30) in Abhängigkeit einer Drehzahl der Eingangswelle (4) oder einer davon ableitbaren Drehzahl einstellbar ist.

3. Getriebe nach Patentanspruch 1 oder 2, wobei der Steuerdruck über die Druckregelvorrichtung (30) in Abhängigkeit vom Arbeitsdruck (p_{A}, p_{B}) oder dem davon abgeleiteten Druck einstellbar ist.

4. Getriebe nach einem der Patentansprüche 1 bis 3, wobei der Fahrbereich rein hydrostatisch ist, oder wobei der Fahrbereich leistungsverzweigt ist und die Hydropumpe einen Pumpenbetrieb aufweist.

5. Getriebe nach einem der vorhergehenden Patentansprüche, wobei die Druckregelvorrichtung (30) über ein Druckregelventil ausgebildet ist oder dieses aufweist.

6. Getriebe nach Patentanspruch 5, wobei ein Ventilkörper des Druckregelventils (30) in eine Sperrstellung vorspannbar und in Öffnungsrichtung mit einem dem Sollwert (p_{x soll}) entsprechenden Druckäquivalent und einem an seinem Druckmittelausgang (32) anstehenden Istwert des Steuerdrucks beaufschlagbar ist.

7. Getriebe nach einem der vorhergehenden Patentansprüche, wobei die Steuereinrichtung (34) derart ausgestaltet ist, dass über sie ein Drehmoment der Hydropumpe (16) und / oder eine Leistung der Hydropumpe (16) begrenzbar ist.

8. Getriebe nach Patentanspruch 7, wobei in der Steuereinrichtung (34) ein Kennfeld abgelegt ist, in dem der Sollwert (pₓ) in Abhängigkeit des Fahrbereichs und in Abhängigkeit einer Drehzahl der Eingangswelle (4) oder einer davon ableitbaren Drehzahl und / oder des Arbeitsdrucks (p_{A}, p_{B}) hinterlegt ist.

9. Verfahren zum Einstellen des Steuerdrucks eines leistungsverzweigten Getriebes (2), das gemäß einem der vorhergehenden Patentansprüche ausgestaltet ist, mit Schritten
- (100) "Bestimmen des Fahrbereichs", und
- "Einstellen des Steuerdruckes in Abhängigkeit des bestimmten Fahrbereichs über die Druckregelvorrichtung (30)",
**gekennzeichnet durch** Schritte
- "Ermitteln eines Sollwerts (p_{x soll}) eines Steuerdrucks des Steuerdruckmittels wenigstens in Abhängigkeit einer maximal zulässigen Absinkrate einer Drehzahl der Antriebsmaschine über eine Steuereinrichtung (34) des Getriebes", und
- "Ansteuern der Druckregelvorrichtung (30) mit einem Sollwertsignal über die Steuereinrichtung (34)".

10. Verfahren nach Patentanspruch 9, wobei der Schritt
- "Einstellen des Steuerdruckes in Abhängigkeit des bestimmten Fahrbereichs über die Druckregelvorrichtung (30)"
Schritte
- (102) "Erfassen einer Drehzahl der Eingangwelle (4) oder einer davon ableitbaren Drehzahl durch eine Drehzahlerfassungseinheit (38)"
- (104) "Ermitteln des Sollwertes (p_{x soll}) in Abhängigkeit der Drehzahl aus einem Kennfeld (43)" und
- (108) "Ansteuern der Druckregelvorrichtung (30) mit einem Sollwertsignal" umfasst.

11. Verfahren nach Patentanspruch 10, wobei etwa zeitgleich mit dem Schritt
- (102) "Erfassen der Drehzahl der Eingangwelle (4) oder der davon ableitbaren Drehzahl durch die Drehzahlerfassungseinheit (38)"
ein Schritt
- (110) "Erfassen des Arbeitsdrucks (p_{A, B}) durch eine Druckerfassungseinheit (45, 46)"
erfolgt, und wobei nach dem Schritt
- (104) "Ermitteln des Sollwertes (p_{x soll}) aus dem Kennfeld (43)"
Schritte
- (112) "Ermitteln eines Grenzarbeitsdrucks (p_{A,B lim}) in Abhängigkeit der Drehzahl aus dem Kennfeld (43)"
- (116) "Ermitteln einer Abweichung des Arbeitsdrucks (p_{A,B}) vom Grenzarbeitsdruck (p_{A,B lim})"
- (118) "Korrektur des Sollwertes (p_{x soll}) in Abhängigkeit der Abweichung" erfolgen.

## Claims

1. Power-split gearbox for a traction drive (1), wherein an input shaft (4) of the gearbox (2) can be coupled to a drive machine (6) of the traction drive (1), having a hydraulic power branch (12) which has a hydraulic pump (16) which can be coupled to the input shaft (4) and has an adjustable displacement volume and a hydraulic motor (18) which can be connected fluidically to the hydraulic pump (16) via a first working line (42) and a second working line (44), and having a further power branch (14) which can be coupled to the input shaft (4), and having a control valve (28) via which control pressure medium can be applied to a hydraulic actuating device (17) of the hydraulic pump (16) as a function of a velocity setpoint value, wherein the hydraulic pump (16) is configured in such a way that a working pressure (p_{A}, p_{B}) of the hydraulic motor (18) or a pressure derived therefrom is effective in the direction of reducing the displacement volume, **characterized by** a pressure-regulating device (30) via which a control pressure of the control pressure medium can be set to a setpoint value (p_{x setp}) which is dependent on a drive position of the gearbox (2) or traction drive (1), and by a control device (34) which is configured in such a way that the setpoint value (p_{x setp}) can be determined at least as a function of a maximum permissible reduction rate of a rotational speed of the drive machine (6) by means of said control device (34.) and the pressure-regulating device (30) can be actuated with a setpoint value signal.

2. Gearbox according to Patent Claim 1, wherein the control pressure can be set by means of the pressure-regulating device (30) as a function of a rotational speed of the input shaft (4) or a rotational speed which can be derived therefrom.

3. Gearbox according to Patent Claim 1 or 2, wherein the control pressure can be set by means of the pressure-regulating device (30) as a function of the working pressure (p_{A}, p_{B}) or the pressure derived therefrom.

4. Gearbox according to one of Patent Claims 1 to 3, wherein the drive position is purely hydrostatic, or wherein the drive position is power split and the hydraulic pump has a pump operating mode.

5. Gearbox according to one of the preceding patent claims, wherein the pressure-regulating device (30) is embodied by means of a pressure-regulating valve or has the latter.

6. Gearbox according to Patent Claim 5, wherein a valve body of the pressure-regulating valve (30) can be prestressed into a blocking position and can have applied to it in the opening direction a pressure equivalent corresponding to the setpoint value (p_{x setp}) and an actual value of the control pressure which is present at its pressure medium outlet (32).

7. Gearbox according to one of the preceding patent claims, wherein the control device (34) is configured in such a way that it can be used to limit a torque of the hydraulic pump (16) and/or a power of the hydraulic pump (16) .

8. Gearbox according to Patent Claim 7, wherein a characteristic diagram in which the setpoint value (pₓ) is stored as a function of the drive position and as a function of a rotational speed of the input shaft (4) or a rotational speed which can be derived therefrom and/or of the working pressure (p_{A}, p_{B}), is stored in the control device (34).

9. Method for setting the control pressure of a power-split gearbox (2) which is configured according to one of the preceding patent claims, having the steps
- (100) "determining the drive position", and
- "setting the control pressure as a function of the determined drive position by means of the pressure-regulating device (30)",
**characterized by** steps
- "setting a setpoint value (pₓₛₑₜₚ) of a control pressure of the control pressure medium at least as a function of a maximum permissible reduction value of a rotational speed of the drive machine by means of a control device (34) of the gearbox",
and
- actuating the pressure-regulating device (30) with a setpoint value signal by means of the control device (34)".

10. Method according to Patent Claim 9, wherein the step
- "setting the control pressure as a function of the determined drive position by means of the pressure-regulating device (30)" comprises steps
- (102) "sensing a rotational speed of the input shaft (4) or a rotational speed which can be derived therefrom, by means of a rotational-speed-sensing unit (38)"
- (104) "determining the setpoint value (p_{x setp}) from a characteristic diagram (43) as a function of the rotational speed" and
- (108) "actuating the pressure-regulating device (30) with a setpoint value signal".

11. Method according to Patent Claim 10, wherein approximately at the same time as the step
- (102) "sensing the rotational speed of the input shaft (4) or the rotational speed which can be derived therefrom, by means of the rotational-speed-sensing unit (38)",
a step
- (110) "sensing the working pressure (p_{A}, p_{B}) by means of a pressure-sensing unit (45, 46)" takes place, and wherein after the step
- (104) "determining the setpoint value (p_{x setp}) from the characteristic diagram (43)",
steps
- (112) "determining a limiting working pressure (p_{A,B lim}) from the characteristic diagram (43) as a function of the rotational speed",
- (116) "determining a deviation of the working pressure (p_{A,B}) from the limiting working pressure (p_{A,B lim})", and
- (118) "correction of the setpoint value (p_{x setp}) as a function of the deviation"
take place.

## Revendications

1. Transmission à puissance dérivée pour un entraînement de roulage (1), dans laquelle un arbre d'entrée (4) de la transmission (2) peut être couplé à une machine d'entraînement (6) de l'entraînement de roulage (1), avec une dérivation de puissance hydraulique (12), qui présente une pompe hydraulique (16) avec un volume de déplacement réglable pouvant être couplée à l'arbre d'entrée (4) et un moteur hydraulique (18) pouvant être relié de façon fluidique à la pompe hydraulique (16) par une première conduite de travail (42) et une seconde conduite de travail (44), et avec une autre dérivation de puissance (14) pouvant être couplée à l'arbre d'entrée (4), et avec une soupape de commande (28), par laquelle un dispositif de réglage hydraulique (17) de la pompe hydraulique (16) peut être alimenté en fluide sous pression de commande en fonction d'une valeur de consigne de la vitesse de roulage, dans laquelle la pompe hydraulique (16) est configurée de telle manière qu'une pression de travail (p_{A}, p_{B}) du moteur hydraulique (18) ou une pression dérivée de celle-ci soit active en direction d'une diminution du volume de déplacement, **caractérisée par** un dispositif de régulation de pression (30), par lequel une pression de commande du fluide sous pression de commande puisse être réglée à une valeur de consigne (p_{x,cons}) dépendant d'une plage de roulage de la transmission (2) ou de l'entraînement de roulage (1), et par un dispositif de commande (34), qui est configuré de telle manière que par son intermédiaire la valeur de consigne (p_{x,cons}) puisse être déterminée au moins en fonction d'une vitesse de diminution maximale admissible du nombre de tours de la machine d'entraînement (6) et que le dispositif de régulation de pression (30) puisse être commandé avec un signal de valeur de consigne.

2. Transmission selon la revendication 1, dans laquelle la pression de commande peut être réglée par le dispositif de régulation de pression (30) en fonction d'un nombre de tours de l'arbre d'entrée (4) ou d'un nombre de tours pouvant être dérivé de celui-ci.

3. Transmission selon la revendication 1 ou 2, dans laquelle la pression de commande peut être réglée par le dispositif de régulation de pression (30) en fonction de la pression de travail (p_{A}, p_{B}) ou de la pression dérivée de celle-ci.

4. Transmission selon l'une quelconque des revendications 1 à 3, dans laquelle la plage de roulage est purement hydrostatique, ou dans laquelle la plage de roulage est à puissance dérivée et la pompe hydraulique présente un fonctionnement de pompe.

5. Transmission selon l'une quelconque des revendications précédentes, dans laquelle le dispositif de régulation de pression (30) est formé par une soupape de régulation de pression ou présente celle-ci.

6. Transmission selon la revendication 5, dans laquelle un corps de soupape de la soupape de régulation de pression (30) peut être précontraint dans une position de fermeture et peut être poussé dans une direction d'ouverture avec une pression équivalente correspondant à la valeur de consigne (p_{x,cons}) et avec une valeur réelle de la pression de commande existant à sa sortie de fluide sous pression (32).

7. Transmission selon l'une quelconque des revendications précédentes, dans laquelle le dispositif de commande (34) est configuré de telle manière qu'un couple de rotation de la pompe hydraulique (16) et/ou une puissance de la pompe hydraulique (16) puisse être limité(e) par son intermédiaire.

8. Transmission selon la revendication 7, dans laquelle un diagramme caractéristique est mémorisé dans le dispositif de commande (34), dans lequel est stockée la valeur de consigne (pₓ) en fonction de la plage de roulage et en fonction d'un nombre de tours de l'arbre d'entrée (4) ou d'un nombre de tours pouvant être dérivé de celui-ci et/ou en fonction de la pression de travail (p_{A}, p_{B}).

9. Procédé de réglage de la pression de commande d'une transmission à puissance dérivée (2), qui est configurée selon l'une quelconque des revendications précédentes, comprenant les étapes suivantes:
- (100) déterminer la plage de roulage, et
- régler la pression de commande en fonction de la plage de roulage déterminée, au moyen du dispositif de régulation de pression (30),
**caractérisé par** les étapes suivantes:
- déterminer une valeur de consigne (p_{x,cons}) d'une pression de commande du fluide sous pression de commande au moins en fonction d'une vitesse de diminution maximale admissible d'un nombre de tours de la machine d'entraînement au moyen d'un dispositif de commande (34) de la transmission, et
- commander le dispositif de régulation de pression (30) avec un signal de valeur de consigne au moyen du dispositif de commande (34).

10. Procédé selon la revendication 9, dans lequel l'étape
- régler la pression de commande en fonction de la plage de roulage déterminée au moyen du dispositif de régulation de pression (30)
comprend les étapes suivantes:
- (102) détecter un nombre de tours de l'arbre d'entrée (4) ou un nombre de tours pouvant être dérivé de celui-ci au moyen d'une unité de détection de nombre de tours (38),
- (104) déterminer la valeur de consigne (p_{x,cons}) en fonction du nombre de tours à partir d'un diagramme caractéristique (43), et
- (108) commander le dispositif de régulation de pression (30) avec un signal de valeur de consigne.

11. Procédé selon la revendication 10, dans lequel environ en même temps que l'étape
- (102) détecter le nombre de tours de l'arbre d'entrée (4) ou le nombre de tours pouvant être dérivé de celui-ci au moyen de l'unité de détection de nombre de tours (38),
on effectue une étape
- (110) détecter la pression de travail (p_{A}, _{B}) au moyen d'une unité de détection de pression (45, 46),
et dans lequel, après l'étape
- (104) déterminer la valeur de consigne (p_{x,cons}) à partir du diagramme caractéristique (43), on effectue les étapes suivantes:
- (112) déterminer une pression de travail limite (p_{A,Blim}) en fonction du nombre de tours à partir du diagramme caractéristique (43),
- (116) déterminer un écart de la pression de travail (p_{A,B}) par rapport à la pression de travail limite (p_{A,Blim}),
- (118) corriger la valeur de consigne (p_{x,cons}) en fonction de l'écart.
